# EUROPEAN PATENT SPECIFICATION

(11) **EP 3 845 624 B1**
(45) Date of publication and mention of the grant of the patent: **01.11.2023**
(21) Application number: 19856258.9
(22) Date of filing: 30.07.2019
(51) Int. Cl.: C12H 6/02, B65D 85/72, C12G 3/04

(54) **ALCOHOLIC BEVERAGE IN SELECTIVELY LIGHT-BLOCKING CONTAINER**
ALKOHOLISCHES GETRÄNK IN EINEM SELEKTIV LICHTBLOCKIERENDEN BEHÄLTER
BOISSON ALCOOLISÉE DANS UN CONTENANT BLOQUANT SÉLECTIVEMENT LA LUMIÈRE

(30) Priority: 31.08.2018 JP 2018163365
(43) Date of publication of application: 07.07.2021
(73) Proprietor: Suntory Holdings Limited, Osaka 530-8203 (JP)
(72) Inventor: MATSUMOTO, Takehiro, Kawasaki-shi, Kanagawa 211-0067 (JP)
(74) Representative: Vossius & Partner Patentanwälte Rechtsanwälte mbB
(86) International application number: PCT/JP2019/029730
(87) International publication number: WO 2020/044912

(56) References cited:
- EP-A1- 2 319 811
- WO-A1-2018/021485
- WO-A1-2018/147152
- JP-A- 2002 065 154
- JP-A- 2006 273 662
- JP-A- 2013 509 334
- JP-A- 2015 119 645
- JP-A- 2016 055 523
- JP-A- 2016 117 170
- JP-A- 2017 013 833
- JP-A- 2017 189 119
- JP-A- 2017 201 931
- JP-A- 2018 023 342
- JP-A- 2018 055 073
- JP-A- 2018 069 573
- "New release of bottled Chu-Hi Bottle Chu targeting restaurants", OENON Group news release, 8 August 2005 (2005-08-08), XP055696946, Retrieved from the Internet: URL:https://www.oenon.jp/news/2005/050808. html [retrieved on 2019-10-23]
- FRANITZA, L. et al.: "Influence of the production process on the key aroma compounds of rum: From molasses to the spirit", Journal of Agricultural and Food Chemistry, vol. 64, no. 47, 2016, pages 9041-9053, XP055696947,

## Description

### TECHNICAL FIELD

The present invention relates to an alcoholic beverage contained in a package capable of selectively inhibiting light transmission. This invention also relates to a method for inhibiting the generation of a deterioration odor from an alcoholic beverage.

### BACKGROUND ART

In most packaged beverages currently on the market, beverages are packed in clear packages such as PET bottles or glass bottles, so that the state of the beverages can be visually perceived from the outside. Since consumers can enjoy the color of such packaged beverages without opening their packages, these beverages can strongly attract consumers' interest while they are on store shelves. Some alcoholic beverages are likewise packed in such clear packages, whereas there are other groups of alcoholic beverage products which need to be protected from light from the viewpoint of quality preservation -- for example, Makgeolli products packed in PET bottles wrapped with an anti-UV film, and beer products packed in amber-colored glass bottles. The packaging of alcoholic beverages such as fruit wines using colourless and transparent glass bottles which block ultraviolet rays is disclosed in e.g., JP 2006/273662 A. The packaging of beer using a compound container having a low light transmission at 400 nm to 500 nm is disclosed in JP 2016/117170 A.

Some alcoholic beverages are prepared by diluting a distilled liquor such as whiskey or brandy, and known examples thereof include whiskey with water, and whiskey with soda. Those alcoholic beverages are all excellent in aroma and taste, and are favored by consumers. Some of them are commercialized and sold in the form of packaged beverages. However, most of those packaged beverages are packed in completely light-blocking packages such as aluminum can.

Meanwhile, in recent years, it has been revealed that the light at particular wavelengths has negative impacts on various materials and human bodies, and there have been provided various methods and materials for preventing such negative impacts. For example, there has been concern that the light at particular wavelengths emitted from electronic device monitors can have adverse effects on eyes, and thus, several materials have been developed that selectively block light at such wavelengths (PTLs 1 and 2).

### CITATION LIST

### PATENT LITERATURES

PTL 1: Japanese Unexamined Patent Application Publication No. JP 2016-6184
PTL 2: Japanese Patent No. JP 6315820

### SUMMARY OF INVENTION

### TECHNICAL PROBLEM

When beverages containing a distilled liquor such as whiskey or brandy are stored under light, deterioration odors such as metallic odor and oily odor may be generated from the beverages. This problem with deterioration odors is particularly critical for those beverages with low alcohol content. Thus, it is difficult to sell such low alcohol content beverages in a state packed in packages that make the state of beverages contained therein visually perceivable.

Therefore, an object of the present invention is to inhibit the generation of a deterioration odor under light from a packaged beverage comprising a distilled liquor and having a relatively low alcohol content, the packaged beverage whose state is visually perceivable from outside.

### SOLUTION TO PROBLEM

The present inventors have made intensive studies for achieving the aforementioned object, and as a result found that the light at particular wavelengths causes the generation of a deterioration odor from distilled liquor-containing beverages. Further, the inventors found that when such beverages are packed in a package capable of selectively inhibiting the transmission of light at such particular wavelengths, the beverages can be visually perceived from the outside of the package, and also the generation of a deterioration odor can be inhibited.

The present invention is directed, but not limited, to the following.
1. A beverage packed in a package, the beverage comprising a distilled liquor and having an alcohol content of 1 to 20 v/v%, wherein the package has a clear section, wherein at least part of the clear section has an optical transmittance of not more than 70% in a region of at least 50% of the wavelength range of from 420 nm to 460 nm, and an optical transmittance of not less than 80% in the wavelength range of more than 540 nm but not more than 780 nm.
2. The beverage as set forth in item 1, wherein said at least part of the clear section further has an optical transmittance of not more than 70% in a region of at least 50% of the wavelength range of more than 460 nm but not more than 540 nm.
3. The beverage as set forth in item 1 or 2, wherein the beverage contains linoleic acid.
4. The beverage as set forth in any one of items 1 to 3, wherein the distilled liquor is a whiskey and/or a brandy.
5. The beverage as set forth in any one of items 1 to 4, wherein the beverage is a carbonated beverage.
6. The beverage as set forth in any one of items 1 to 5, further comprising a fruit juice.
7. A method for inhibiting the generation of a deterioration odor from a beverage comprising a distilled liquor and having an alcohol content of 1 to 20 v/v%, the method comprising the step of packing the beverage in a package,
   wherein the package has a clear section, wherein at least part of the clear section has an optical transmittance of not more than 70% in a region of at least 50% of the wavelength range of from 420 nm to 460 nm, and an optical transmittance of not less than 80% in the wavelength range of more than 540 nm but not more than 780 nm.
8. A method for inhibiting the generation of a deterioration odor from a beverage comprising a distilled liquor and having an alcohol content of 1 to 20 v/v%, the method comprising the steps of:
   packing the beverage in a package, and
   adapting the package so as to ensure that at least part of a clear section possessed by the package has an optical transmittance of not more than 70% in a region of at least 50% of the wavelength range of from 420 nm to 460 nm, and an optical transmittance of not less than 80% in the wavelength range of more than 540 nm but not more than 780 nm.

### ADVANTAGEOUS EFFECTS OF INVENTION

The package used for the beverage of the present invention can inhibit the generation of a deterioration odor, especially a metallic odor, under light from the beverage comprising a distilled liquor, and also can make the beverage visually perceivable from the outside of the package. Therefore, this invention makes it possible to maintain the quality of the beverage and also allows consumers to enjoy the color of the beverage.

A metallic odor, which is one of deterioration odors, refers to a metal-like pungent odor similar to the lingering odor on your hands after hanging on an iron bar in a playground. As described later in the Examples section, the present inventors confirmed that 1-octen-3-one is one of the causative agents of a metallic odor. Although the present invention is not bound by any theory, it is believed that 1-octen-3-one is generated from fatty acids such as linoleic acid by light at particular wavelengths, and that the generation of this agent is inhibited by the present invention.

Typically, even after the beverage of the present invention is irradiated with light at an intensity of 20000 lux for 7 days, the concentration of 1-octen-3-one in the beverage is maintained at a level of not more than 10 nmol/L.

### DESCRIPTION OF EMBODIMENTS

The following provides descriptions of the present invention, with a main focus placed on the beverage of this invention.

### (Distilled liquor)

The distilled liquor used in this invention is not limited by its source materials or by its preparation method. Examples of the distilled liquor include spirits (e.g., vodka, rum, tequila, gin, aquavit, Korn), liqueurs, whiskeys (e.g., whiskey and brandy), and shochu. In particular, a distilled liquor containing fatty acids such as linoleic acid is preferred. It is known that many whiskeys and brandies contain fatty acids such as linoleic acid, and thus, a whiskey or a brandy is preferably used in this invention. In one embodiment of this invention, the beverage of this invention contains linoleic acid at a concentration of 0.01 nmol/L to 25000 nmol/L.

The term "whiskey" as referred to herein refers to a distilled liquor obtained by saccharifying and fermenting a cereal such as barley, rye or corn with a malt enzyme, followed by distilling the fermented mash. The distilled liquid is generally aged in barrels made of oak or other kinds of wood to give a final product. Examples of whiskeys include, but are not limited to, bourbon, Tennessee whiskey, Scotch whiskey, Irish whiskey, Canadian whiskey, Japanese whiskey, malt whiskey, grain whiskey, corn whiskey, rye whiskey, and/or blended whiskeys made from blends of any of the above whiskeys. The beverage of the present invention preferably comprises a bourbon whiskey.

The term "brandy" as referred to herein refers to a distilled liquor obtained by distilling a fruit liquor. The distilled liquid is generally aged in barrels made of oak or other kinds of wood to give a final product. Examples of brandies are represented by, but not limited to, grape-based brandies such as Cognac or Armagnac. Other brandies made of apples, pears, or cherries as a primary ingredient may also be used.

The definitions of the terms "whiskey" and "brandy" as used herein are not bound by the definitions of different liquors as set forth in the Japanese liquor tax law.

The contents of fatty acids such as linoleic acid, and 1-octen-3-one in the beverage of the present invention can be measured using LCMS. A typical measurement method will be described later in the Examples section.

### (Package)

The beverage of the present invention is provided in a packaged form. The package has a clear section, wherein at least part of the clear section has an optical transmittance of not more than 70% in a region of at least 50% of the wavelength range of from 420 nm to 460 nm, and an optical transmittance of not less than 80% in the wavelength range of more than 540 nm but not more than 780 nm. This means that the maximum optical transmittance in a region of at least 50% of the former wavelength range is not more than 70%, and that the minimum optical transmittance in the latter wavelength range is not less than 80%.

The package may be clear in part or in its entirety. For example, it is acceptable that a lid section of the package may be non-clear and the remaining sections of the package may be all clear. Also, a non-clear part may be present within a clear section. The percentage of the area of a clear section relative to the surface area of the entire package is not particularly limited, as long as the effects of the present invention can be, even if only slightly, obtained. For example, the percentage of said area is not less than 10%, not less than 20%, not less than 30%, not less than 40%, not less than 50%, not less than 60%, not less than 70%, not less than 80%, not less than 90%, or 100%.

At least part of the clear section is capable of selectively inhibiting the transmission of light at particular wavelengths. The entirety of the clear section may be capable of selectively inhibiting the transmission of light at particular wavelengths. The percentage of the area of a region capable of selectively inhibiting light transmission relative to the area of the clear section is not particularly limited, as long as the effects of the present invention can be, even if only slightly, obtained. For example, the percentage of said area is not less than 10%, not less than 20%, not less than 30%, not less than 40%, not less than 50%, not less than 60%, not less than 70%, not less than 80%, not less than 90%, or 100%.

The wavelength range of light inhibited from transmitting in the present invention is preferably at least 60%, more preferably at least 70%, more preferably at least 80%, more preferably at least 90%, more preferably 100%, of the wavelength range of from 420 nm to 460 nm. In a certain embodiment, light in a region of at least 50% of the wavelength range of more than 460 nm but not more than 540 nm is further inhibited from transmitting. In such a case, the wavelength range of light inhibited from transmitting is preferably at least 60%, more preferably at least 70%, more preferably at least 80%, more preferably at least 90%, more preferably 100%, of the wavelength range of more than 460 nm but not more than 540 nm.

In each of the aforementioned wavelength ranges of light inhibited from transmitting, the optical transmittance is independently preferably not more than 60%, more preferably not more than 50%, more preferably not more than 40%, more preferably not more than 30%, more preferably not more than 20%, more preferably not more than 10%.

In contrast, the aforementioned at least part of the clear section maintains a high optical transmittance in the wavelength range of more than 540 nm but not more than 780 nm. The optical transmittance in said wavelength range is preferably not less than 85%, more preferably not less than 90%, more preferably not less than 95%.

In a preferred embodiment, the optical transmittance in a region of at least 60% of the wavelength range of from 420 nm to 460 nm is not more than 60%, and the optical transmittance in the wavelength range of more than 540 nm but not more than 780 nm is not less than 80%. In another preferred embodiment, the optical transmittance in a region of at least 70% of the wavelength range of from 420 nm to 460 nm is not more than 50%, and the optical transmittance in the wavelength range of more than 540 nm but not more than 780 nm is not less than 90%.

In still another preferred embodiment, the optical transmittance in a region of at least 60% of the wavelength range of more than 460 nm but not more than 540 nm is not more than 60%, or the optical transmittance in a region of at least 70% of the aforementioned wavelength range is not more than 50%.

Optical transmittance can be measured using any methods known to skilled artisans. For example, optical transmittance can be measured using a spectrophotometer by following the method described in the Examples section.

Examples of the form of the package of the present invention include, but are not limited to, resin bottles such as PET bottle, and glass bottle.

In order to achieve selective inhibition of light transmission, the package of the present invention may be itself made from a material capable of inhibiting light transmission in a wavelength-selective manner. Alternatively, a package may be made from a material selected from polyesters such as polyethylene terephthalate (PET), polybutylene terephthalate, polyethylene naphthalate and polycyclohexylenedimethylene terephthalate, polypropylene, polyethylene, polyvinyl chloride, tricellulose acetate, glass, and the like, and further adapted by applying a different material having such an inhibitory capability. For example, a package may be coated with a material capable of inhibiting light transmission in a wavelength-selective manner, or a film comprising such a material having inhibitory capability may be attached onto a surface of a package. Examples of such a material are disclosed in PTLs 1 and 2.

Since the package of the present invention has a clear section, the state of the beverage packed in the package can be visually perceived through the clear section. The term "clear" as used herein in connection with the phrase "clear section" means that the section is transparent in such a manner that the state of a beverage contained in a package can be visually perceived through said section from the outside of the package. The clear section may be colored as long as the aforementioned requirement for clarity is satisfied.

### (Alcohol content)

The alcohol content of the beverage of the present invention is in the range of from 1 to 20 v/v%, preferably from 1 to 15 v/v%, more preferably from 2 to 10 v/v%. Unless otherwise specified herein, the term "alcohol" refers to ethanol. In this invention, the alcohol content of the beverage can be measured by any known methods -- for example, by a vibrational densimeter. To be specific, the beverage is filtered or sonicated to remove carbon dioxide gas, and the CO₂-free sample is distilled under direct fire. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

### (Carbon dioxide gas)

The beverage of the present invention may be provided as a carbonated beverage containing carbon dioxide gas. Carbon dioxide gas can be added to the beverage using a method commonly known to skilled artisans. As non-limiting examples of such a method, carbon dioxide may be dissolved in a beverage under pressure; carbon dioxide and a beverage may be mixed in piping using a mixer such as a carbonator produced by Tuchenhagen GmbH; a beverage may be sprayed into a tank filled with carbon dioxide to cause the beverage to absorb carbon dioxide; or a beverage may be mixed with carbonated water. The pressure of carbon dioxide gas is adjusted using any suitable means as mentioned above.

The carbon dioxide gas pressure in the beverage of the present invention at a liquid temperature of 20°C is not particularly limited, and is in the range of preferably from 0.7 to 3.5 kgf/cm², more preferably from 0.8 to 2.8 kgf/cm². In this invention, the carbon dioxide gas pressure can be measured using GVA-500A, a gas volume analyzer produced by Kyoto Electronics Manufacturing Co., Ltd. For example, with the sample temperature being adjusted to 20°C, a packaged beverage placed in the aforementioned gas volume analyzer is subjected to gas venting (snifting) and shaking, and then measured for carbon dioxide gas pressure. Unless otherwise specified herein, the carbon dioxide gas pressure refers to a carbon dioxide gas pressure at 20°C.

### (Fruit juice)

The beverage of the present invention may contain a fruit juice. The fruit juice can be of any forms, including a straight fruit juice used as freshly squeezed from a fruit, or a concentrated fruit juice obtained by concentrating a straight fruit juice. Also, a clear fruit juice or a cloudy fruit juice may be used. Further, use may be made of a fruit juice from whole fruit, prepared by crushing the whole fruit including husk and simply removing particularly coarse solid matters like seeds, a fruit purée prepared by sieving a fruit, or a fruit juice obtained by crushing or extracting a dried fruit pulp.

The type of a fruit juice is not particularly limited. Examples of fruit juices include, but are not limited to, citrus fruit juices (*e.g.*, juices from orange, *Citrus unshiu,* grapefruit, lemon, lime, *Citrus junos, Citrus iyo, Citrus natsudaidai, Citrus hassaku, Citrus reticulata* var *poonensis, Citrus depressa, Citrus sphaerocarpa,* and the like), apple juice, grape juice, peach juice, tropical fruit juices (*e.g*., pineapple juice, guava juice, banana juice, mango juice, acerola juice, litchi juice, papaya juice, passion fruit juice), and other fruit juices (*e.g.,* Japanese apricot juice, Japanese pear juice, apricot juice, plum juice, berry juice, kiwi fruit juice), strawberry juice, and melon juice. Any one of the aforementioned fruit juices may be used alone, or two or more of them may be used in combination. Citrus fruit juices are particularly preferred since they can add a refreshing taste to the beverage. The content of a fruit juice in the beverage of this invention is not particularly limited.

### (Other components)

Like common beverages, the beverage of the present invention may have any of various additives and other components added thereto, to the extent that such additives do not interfere with the effects of this invention. Examples of such additives include, but are not limited to, sweeteners such as sugars and high-intensity sweeteners, acidulants, flavorants, vitamins, pigments, antioxidants, emulsifiers, preservatives, essences, dietary fibers, pH adjustors, thickeners, and quality stabilizers.

### (Type of beverage)

The type of a beverage to which the present invention is applied is not limited. For example, any beverages prepared by diluting a distilled liquor with water, carbonated water or the like can be used, such as distilled liquors with water, soda or the like.

### (Method)

In another aspect, the present invention is directed to a method for inhibiting the generation of a deterioration odor from a beverage comprising a distilled liquor and having an alcohol content of 1 to 20 v/v%. This method comprises the step of packing the beverage in a package, wherein the package has a clear section, wherein at least part of the clear section has an optical transmittance of not more than 70% in a region of at least 50% of the wavelength range of from 420 nm to 460 nm, and an optical transmittance of not less than 80% in the wavelength range of more than 540 nm but not more than 780 nm. Alternatively, the inventive method may comprise the steps of: packing the beverage in a package, and adapting the package so as to ensure that at least part of a clear section possessed by the package has an optical transmittance of not more than 70% in a region of at least 50% of the wavelength range of from 420 nm to 460 nm, and an optical transmittance of not less than 80% in the wavelength range of more than 540 nm but not more than 780 nm.

The types and contents of the components contained in the beverage, wavelength ranges, optical transmittances and their preferred ranges, and adjustment procedures thereof, and a procedure for adapting the package are as described above in relation to the beverage of this invention or are obvious from the descriptions given above regarding the inventive beverage. The aforementioned steps can be performed in any way as long as the contents of components in a finally obtained beverage, the wavelength ranges of light, optical transmittances, and the like fall within the desired ranges.

The term "inhibit(ing/ed/ion)" as used herein means not only complete inhibition but also partial inhibition. Therefore, for example, when the amount generated of a causative agent of a deterioration odor is, even if only slightly, lower than that generated with no use of the package of the present invention, it can be said that the deterioration odor is "inhibited".

### (Numerical ranges)

For the convenience of clarification, all numerical ranges defined herein by lower and upper limits, *i.e.* defined as "from lower limit to upper limit", include their lower and upper limits. For example, the range defined as "from 1 to 2" includes 1 and 2.

### EXAMPLES

Hereunder, the present invention will be described by way of examples, but this invention is not limited to these examples.

### (Analysis and evaluation methods)

In this example, concentration measurement and sensory evaluation of different samples were performed according to the following methods.

### 1-Octen-3-one concentration measurement method (LC-MS)

| | |
|---|---|
| LC system: | Agilent Technologies 1290 Infinity, or Agilent Technologies 1290 Infinity II |
| Column: | Waters Cortecs UPLC T3, 1.6 µm, 2.1 × 150 mm |
| Column temperature: | 40°C |
| Quantified ion: | 1-Octen-3-one: m/z = 305.12553 |

Mobile phase:

| | |
|---|---|
| Solution A: | 10 mM ammonium acetate |
| Solution B: | Acetonitrile |
| Equilibration: | 5 min. |

Fatty acid analysis method (LC-MS)

| | |
|---|---|
| LC system: | Agilent Technologies 1290 Infinity or 1290 Infinity II |
| Column: | Phenomenex Kinetex C18, 1.3 µm, 2.1 × 50 mm, two in series |
| Column temperature: | 40°C |
| Quantified ion: | Linoleic acid: m/z = 279.23295 |

Mobile phase:

| | |
|---|---|
| Solution A: | Acetonitrile:water = 80:20 (1 mM ammonium formate) |
| Solution B: | Acetonitrile:water = 80:20 (0.1% formic acid) |

### Sensory evaluation

Different beverages were evaluated by six panelists for the intensity of a deterioration odor, or specifically a metallic odor (a metal-like pungent odor similar to the lingering odor on your hands after hanging on an iron bar in a playground), which was generated by light irradiation. To be specific, the intensity of a metallic odor in a beverage not deteriorated by light irradiation (*i.e.,* the sample with 5% alcohol content used in Experiment 1 as detailed below) was regarded as 2 points, and the intensity of a metallic odor in a beverage packed in a clear, colorless package and deteriorated by irradiation with fluorescent light (at 20000 lux for 7 days; this irradiation is equivalent to ordinary light irradiation in stores for 7 months) (*i.e.,* the sample with 5% alcohol content used in Experiment 2 as detailed below) was regarded as 8 points. Metallic odors of intermediate intensities between these extreme intensities were rated as 3 to 7 points depending on the intensity. The obtained ratings were averaged. Before the sensory evaluation, the panelists had confirmed the relationship between the different intensities of metallic odor and their corresponding ratings using samples serving as a reference for 2- to 8-point ratings, so as to ensure that their ratings were standardized as much as possible.

### (Test Example 1)

Four types of whiskey-containing carbonated beverages with different alcohol contents were prepared and packed in different types of packages to obtain test samples. These test samples were subjected to sensory evaluation before or after light irradiation, and measured for 1-octen-3-one concentration.

A beverage with 5 v/v% alcohol content was prepared by diluting a commercially available whiskey 8-fold with carbonated water (a mixture of high-pressure carbonated water and water). Beverages with 10, 20 and 30 v/v% alcohol contents were prepared by diluting the commercial whiskey 8-fold with alcoholic carbonated water solutions with different alcohol concentrations (obtained by mixing high-pressure carbonated water, water and neutral spirits at different ratios). All of the prepared beverages contained the same amount of whiskey, and had a linoleic acid concentration of 330 nmol/L and a carbon dioxide gas pressure of 2.3 kg/cm² before light irradiation test.

The above-prepared beverages were each packed in different types of packages. In Experiments 1 to 8, clear, colorless PET bottles were used. In Experiment 9, an anti-UV film (Sukkiri Clear Film RT05L, produced by Lintec Commerce, Inc.) was attached onto the entire surfaces of clear PET bottles to protect against light transmission. In Experiment 10, blue glass bottles were used. In Experiment 11, brown glass bottles were used. In Experiment 12, an anti-blue light film (Anti-Blue Light LCD Protective Film EF-FL215WBL, produced by Elecom Co., Ltd.) was attached onto the entire surfaces of clear, colorless PET bottles to protect against light transmission.

In Experiment 1, sensory evaluation and concentration measurement were performed before light irradiation.

In Experiments 2 to 12, sensory evaluation and concentration measurement were performed after the samples were irradiated with light for 7 days. In Experiments 2 and 9 to 12, fluorescent light (white) at 20000 lux was applied. In Experiments 3 to 8, the aforementioned fluorescent light was applied while being passed through a filter that permits only the transmission of light at particular wavelengths (Characteristic Wavelength Transmission Filter (Band Pass Filter), produced by FUJIFILM Corporation). Although the wavelengths of light applied to the samples varied to some degree, representative wavelengths of transmitted light are as shown in Tables 1 and 2.

The results of the above experiments are indicated in the tables given below.

### [Table 1]

**Table 1 Sensory evaluation results of whiskey & soda samples before/after light irradiation**

| | Alcohol content (v/v) | 5% | 10% | 20% | 30% |
|---|---|---|---|---|---|
| Experiment 1 | Before light irradiation | 2.0 | 2.0 | 2.0 | 2.0 |
| Experiment 2 | After irradiation with white light | 8.0 | 8.0 | 5.9 | 2.0 |
| Experiment 3 | After irradiation with 420 nm light | 7.0 | 6.0 | 4.0 | 2.0 |
| Experiment 4 | After irradiation with 460 nm light | 6.0 | 5.0 | 4.0 | 2.0 |
| Experiment 5 | After irradiation with 500 nm light | 5.5 | 4.5 | 4.0 | 2.0 |
| Experiment 6 | After irradiation with 540 nm light | 3.5 | 3.2 | 2.6 | 2.0 |
| Experiment 7 | After irradiation with 580 nm light | 3.5 | 3.2 | 2.7 | 1.9 |
| Experiment 8 | After irradiation with 700 nm light | 3.5 | 3.2 | 2.6 | 1.9 |
| Experiment 9 | After irradiation with white light (anti-UV film) | 8.0 | 8.0 | 6.0 | 1.9 |
| Experiment 10 | After irradiation with white light (blue glass bottle) | 7.0 | 6.0 | 3.9 | 2.0 |
| Experiment 11 | After irradiation with white light (brown glass bottle) | 2.5 | 2.4 | 2.2 | 2.0 |
| Experiment 12 | After irradiation with white light (anti-blue light film) | 3.0 | 2.8 | 2.4 | 2.0 |

### [Table 2]

**Table 2 1-Octen-3-one concentration of whiskey & soda samples before/after light irradiation (nmol/L)**

| | Alcohol content (v/v) | 5% | 10% | 20% | 30% |
|---|---|---|---|---|---|
| Experiment 1 | Before light irradiation | 0.0 | 0.0 | 0.0 | 0.0 |
| Experiment 2 | After irradiation with white light | 22.2 | 16.5 | 10.2 | 2.0 |
| Experiment 3 | After irradiation with 420 nm light | 13.7 | 10.8 | 10.2 | 2.0 |
| Experiment 4 | After irradiation with 460 nm light | 12.5 | 10.7 | 10.2 | 1.9 |
| Experiment 5 | After irradiation with 500 nm light | 9.5 | 9.0 | 9.0 | 2.0 |
| Experiment 6 | After irradiation with 540 nm light | 7.7 | 6.8 | 3.0 | 2.0 |
| Experiment 7 | After irradiation with 580 nm light | 3.8 | 3.5 | 3.1 | 1.9 |
| Experiment 8 | After irradiation with 700 nm light | 6.5 | 6.0 | 3.0 | 1.9 |
| Experiment 9 | After irradiation with white light (anti-UV film) | 21.3 | 15.9 | 10.1 | 1.9 |
| Experiment 10 | After irradiation with white light (blue glass bottle) | 18.9 | 14.2 | 3.0 | 2.0 |
| Experiment 11 | After irradiation with white light (brown glass bottle) | 7.0 | 6.3 | 3.0 | 1.9 |
| Experiment 12 | After irradiation with white light (anti-blue light film) | 8.0 | 8.1 | 3.0 | 2.0 |

As evident from Experiments 1 and 2, a deterioration odor was generated by light irradiation. A deterioration odor was generated in higher amounts particularly in samples with lower alcohol contents. The concentration of a causative agent of a deterioration odor (1-octen-3-one) increased with an increase in the intensity of a deterioration odor.

As evident from Experiments 3 to 8, it was found that the light at wavelengths of from 420 to 460 nm has a strong impact on the generation of a deterioration odor; that the light at wavelengths of more than 460 nm but not more than 540 nm has a relatively strong impact on the generation of a deterioration odor; and that the light at wavelengths of more than 540 nm but not more than about 700 nm has a relatively small impact on the generation of a deterioration odor. Also, from the results of Experiment 9 which used an anti-UV film (that mainly blocks light at wavelengths of not more than 380 nm), it was revealed that the light at wavelengths below 420 nm has a small impact on the generation of a deterioration odor. Similar tendencies were observed from the results for the concentration of 1-octen-3-one generated.

As supporting evidence for the above results, little deterioration odor was inhibited in Experiment 10 which used blue glass bottles having a high optical transmittance at wavelengths of from 420 to 460 nm (capable of blocking light at 590 to 780 nm), whereas a deterioration odor was effectively inhibited in Experiments 11 and 12 which used brown glass bottles capable of blocking light at wavelengths of from 420 to 460 nm (capable of blocking light at 380 to 780 nm), or an anti-blue light film (having an optical transmittance of not more than 70% at wavelengths of from 380 to 467 nm and an optical transmittance of not less than 80% at wavelengths of from 527 to 780 nm). Similar tendencies were observed from the results for the concentration of 1-octen-3-one generated.

Further, when an anti-blue light film was used, the state of beverages contained in packages was easily visually perceivable.

### (Test Example 2)

By following the same procedure as in Test Example 1, four different whiskey-containing beverages with different alcohol contents were prepared and packed in different types of packages to obtain test samples. These test samples were subjected to sensory evaluation before or after light irradiation, and measured for 1-octen-3-one concentration. The same procedure as in Test Example 1 was performed except that non-carbonated beverages were prepared using water instead of carbonated water. All of the prepared beverages had a linoleic acid concentration of 330 nmol/L before light irradiation test. The results are shown in the tables given below. Similar tendencies to those shown in Test Example 1 were observed.

### [Table 3]

**Table 3 Sensory evaluation results of whiskey & water samples before/after light irradiation**

| | Alcohol content (v/v) | 5% | 10% | 20% | 30% |
|---|---|---|---|---|---|
| Experiment 13 | Before light irradiation | 2.0 | 2.0 | 2.0 | 2.0 |
| Experiment 14 | After irradiation with white light | 8.0 | 8.0 | 6.0 | 2.0 |
| Experiment 15 | After irradiation with 420 nm light | 7.0 | 6.0 | 4.0 | 2.0 |
| Experiment 16 | After irradiation with 460 nm light | 6.0 | 5.0 | 4.0 | 2.0 |
| Experiment 17 | After irradiation with 500 nm light | 5.5 | 4.5 | 4.0 | 2.0 |
| Experiment 18 | After irradiation with 540 nm light | 3.5 | 3.2 | 2.6 | 2.0 |
| Experiment 19 | After irradiation with 580 nm light | 3.5 | 3.2 | 2.6 | 2.0 |
| Experiment 20 | After irradiation with 700 nm light | 3.5 | 3.2 | 2.6 | 2.0 |
| Experiment 21 | After irradiation with white light (anti-UV film) | 8.0 | 8.0 | 6.0 | 2.0 |
| Experiment 22 | After irradiation with white light (blue glass bottle) | 7.0 | 6.0 | 4.0 | 2.0 |
| Experiment 23 | After irradiation with white light (brown glass bottle) | 2.5 | 2.4 | 2.2 | 2.0 |
| Experiment 24 | After irradiation with white light (anti-blue light film) | 3.0 | 2.8 | 2.4 | 2.0 |

### [Table 4]

**Table 4 1-Octen-3-one concentration of whiskey & water samples before/after light irradiation (nmol/L)**

| | Alcohol content (v/v) | 5% | 10% | 20% | 30% |
|---|---|---|---|---|---|
| Experiment 13 | Before light irradiation | 0.0 | 0.0 | 0.0 | 0.0 |
| Experiment 14 | After irradiation with white light | 22.2 | 16.6 | 10.1 | 2.0 |
| Experiment 15 | After irradiation with 420 nm light | 13.7 | 10.8 | 10.1 | 1.9 |
| Experiment 16 | After irradiation with 460 nm light | 12.4 | 10.0 | 10.3 | 2.0 |
| Experiment 17 | After irradiation with 500 nm light | 9.6 | 9.3 | 9.1 | 2.0 |
| Experiment 18 | After irradiation with 540 nm light | 7.7 | 6.8 | 3.0 | 2.1 |
| Experiment 19 | After irradiation with 580 nm light | 3.9 | 3.5 | 2.9 | 2.0 |
| Experiment 20 | After irradiation with 700 nm light | 6.7 | 6.0 | 3.0 | 1.9 |
| Experiment 21 | After irradiation with white light (anti-UV film) | 21.0 | 15.9 | 10.2 | 2.0 |
| Experiment 22 | After irradiation with white light (blue glass bottle) | 18.9 | 14.2 | 3.0 | 2.0 |
| Experiment 23 | After irradiation with white light (brown glass bottle) | 7.1 | 6.3 | 3.0 | 2.0 |
| Experiment 24 | After irradiation with white light (anti-blue light film) | 8.0 | 7.9 | 3.0 | 2.0 |

### (Test Example 3)

An experiment was performed to confirm that the causative agent of a deterioration odor is 1-octen-3-one.

A commercially available whiskey was diluted with water to prepare a test sample having an alcohol content of 5 v/v% and a linoleic acid concentration of 100 nmol/L. Further, 3, 5, 10, 15 or 20 nmol/L of 1-octen-3-one was added to this sample to prepare other new test samples. These test samples, immediately after being prepared, were studied through sensory evaluation on the intensity of a metallic odor, which was an evaluation item investigated in Test Examples 1 and 2. The results are shown in the table given below. It was found that 1-octen-3-one is responsible for a metallic odor.

**[Table 5]**

| 1-Octen-3-one concentration added (nmol/L) | 0 | 3 | 5 | 10 | 15 | 20 |
|---|---|---|---|---|---|---|
| Metallic odor | 2.0 | 3.2 | 5.3 | 6.1 | 7.1 | 8.0 |

### (Test Example 4)

A study was conducted to investigate the cause of generation of a causative agent of a deterioration odor.

A commercially available whiskey was diluted with water to prepare a test sample having an alcohol content of 5 v/v% and a linoleic acid concentration of 100 nmol/L. Further, 100 nmol/L of linoleic acid was added to this sample to prepare another new test sample. These test samples were packed in clear, colorless PET bottles, irradiated with fluorescent light (white) at 20000 lux for 7 days, and then subjected to sensory evaluation and 1-octen-3-one concentration measurement. The results are shown in the table given below. It was found that fatty acids such as linoleic acid are responsible for the production of 1-octen-3-one, and eventually for the generation of a metallic odor.

**[Table 6]**

| | Linoleic acid concentration before light irradiation (nmo/L) | 1-Octen-3-one concentration after light irradiation (nmol/L) | Sensory rating of metallic odor |
|---|---|---|---|
| No addition of 100 nmol/L linoleic acid | 100 | 6.0 | 3.6 |
| Addition of 100 nmol/L linoleic acid | 200 | 13.4 | 6.8 |

## Claims

1. A beverage packed in a package, the beverage comprising a distilled liquor and having an alcohol content of 1 to 20 v/v%, wherein the package has a clear section, wherein at least part of the clear section has an optical transmittance of not more than 70% in a region of at least 50% of the wavelength range of from 420 nm to 460 nm, and an optical transmittance of not less than 80% in the wavelength range of more than 540 nm but not more than 780 nm.

2. The beverage according to claim 1, wherein said at least part of the clear section further has an optical transmittance of not more than 70% in a region of at least 50% of the wavelength range of more than 460 nm but not more than 540 nm.

3. The beverage according to claim 1 or 2, wherein the beverage contains linoleic acid.

4. The beverage according to any one of claims 1 to 3, wherein the distilled liquor is a whiskey and/or a brandy.

5. The beverage according to any one of claims 1 to 4, wherein the beverage is a carbonated beverage.

6. The beverage according to any one of claims 1 to 5, further comprising a fruit juice.

7. A method for inhibiting the generation of a deterioration odor from a beverage comprising a distilled liquor and having an alcohol content of 1 to 20 v/v%, the method comprising the step of packing the beverage in a package,
wherein the package has a clear section, wherein at least part of the clear section has an optical transmittance of not more than 70% in a region of at least 50% of the wavelength range of from 420 nm to 460 nm, and an optical transmittance of not less than 80% in the wavelength range of more than 540 nm but not more than 780 nm.

8. A method for inhibiting the generation of a deterioration odor from a beverage comprising a distilled liquor and having an alcohol content of 1 to 20 v/v%, the method comprising the steps of:
packing the beverage in a package, and
adapting the package so as to ensure that at least part of a clear section possessed by the package has an optical transmittance of not more than 70% in a region of at least 50% of the wavelength range of from 420 nm to 460 nm, and an optical transmittance of not less than 80% in the wavelength range of more than 540 nm but not more than 780 nm.

## Patentansprüche

1. Getränk, in einer Packung verpackt, wobei das Getränk einen destillierten Alkohol aufweist und einen Alkoholgehalt von 1 bis 20 Vol.-% aufweist, wobei die Verpackung einen durchsichtigen Abschnitt aufweist, wobei mindestens ein Teil des durchsichtigen Abschnitts eine optische Durchlässigkeit von nicht mehr als 70 % in einem Bereich von mindestens 50 % des Wellenlängenbereichs von 420 nm bis 460 nm und eine optische Durchlässigkeit von nicht weniger als 80 % im Wellenlängenbereich von mehr als 540 nm, aber nicht mehr als 780 nm aufweist.

2. Getränk nach Anspruch 1, wobei der mindestens eine Teil des durchsichtigen Abschnitts außerdem eine optische Durchlässigkeit von nicht mehr als 70 % in einem Bereich von mindestens 50 % des Wellenlängenbereichs von mehr als 460 nm, aber nicht mehr als 540 nm aufweist.

3. Getränk nach Anspruch 1 oder 2, wobei das Getränk Linolsäure aufweist.

4. Getränk nach einem der Ansprüche 1 bis 3, wobei der destillierte Alkohol ein Whisky und/oder ein Weinbrand ist.

5. Getränk nach einem der Ansprüche 1 bis 4, wobei das Getränk ein kohlensäurehaltiges Getränk ist.

6. Getränk nach einem der Ansprüche 1 bis 5, ferner aufweisend einen Fruchtsaft.

7. Verfahren zum Hemmen der Bildung eines Verderbnisgeruchs aus einem Getränk, das einen destillierten Alkohol aufweist und einen Alkoholgehalt von 1 bis 20 Vol.-% aufweist, wobei das Verfahren den Schritt des Verpackens des Getränks in eine Packung aufweist,
wobei die Verpackung einen durchsichtigen Abschnitt aufweist, wobei mindestens ein Teil des durchsichtigen Abschnitts eine optische Durchlässigkeit von nicht mehr als 70 % in einem Bereich von mindestens 50 % des Wellenlängenbereichs von 420 nm bis 460 nm und eine optische Durchlässigkeit von nicht weniger als 80 % im Wellenlängenbereich von mehr als 540 nm, aber nicht mehr als 780 nm aufweist.

8. Verfahren zum Hemmen der Bildung eines Verderbnisgeruchs aus einem Getränk, das einen destillierten Alkohol aufweist und einen Alkoholgehalt von 1 bis 20 Vol.-% aufweist, wobei das Verfahren die folgenden Schritte aufweist:
Verpacken des Getränks in eine Packung, und
Anpassen der Packung, um zu gewährleisten, dass mindestens ein Teil eines durchsichtigen Abschnitts, den die Packung besitzt, eine optische Durchlässigkeit von nicht mehr als 70 % in einem Bereich von mindestens 50 % des Wellenlängenbereichs von 420 nm bis 460 nm und eine optische Durchlässigkeit von nicht weniger als 80 % im Wellenlängenbereich von mehr als 540 nm, aber nicht mehr als 780 nm aufweist.

## Revendications

1. Boisson conditionnée dans un conditionnement, la boisson comprenant un alcool distillé et ayant une teneur en alcool de 1 à 20 % v/v, dans laquelle le conditionnement dispose d'une section claire, dans laquelle au moins une partie de la section claire présente une transmittance optique d'au plus 70 % dans une zone d'au moins 50 % de la plage de longueurs d'onde de 420 nm à 460 nm, et une transmittance optique d'au moins 80 % dans la plage de longueurs d'onde de plus de 540 nm mais pas plus de 780 nm.

2. Boisson selon la revendication 1, dans laquelle ladite au moins une partie de la section claire présente en outre une transmittance optique d'au plus 70 % dans une zone d'au moins 50 % de la plage de longueurs d'onde de plus de 460 nm mais de moins de 540 nm.

3. Boisson selon la revendication 1 ou 2, dans laquelle la boisson contient de l'acide linoléique.

4. Boisson selon l'une quelconque des revendications 1 à 3, dans laquelle l'alcool distillé est un whisky et/ou un brandy.

5. Boisson selon l'une quelconque des revendications 1 à 4, dans laquelle la boisson est une boisson gazeuse.

6. Boisson selon l'une quelconque des revendications 1 à 5, comprenant en outre un jus de fruits.

7. Procédé pour inhiber la génération d'une odeur de dégradation d'une boisson comprenant un alcool distillé et ayant une teneur en alcool de 1 à 20 % v/v, le procédé comprenant l'étape de conditionnement de la boisson dans un conditionnement, dans lequel le conditionnement dispose d'une section claire, dans lequel au moins une partie de la section claire présente une transmittance optique d'au plus 70 % dans une zone d'au moins 50 % de la plage de longueurs d'onde de 420 nm à 460 nm, et une transmittance optique d'au moins 80 % dans la plage de longueurs d'onde de plus de 540 nm mais pas plus de 780 nm.

8. Procédé pour inhiber la génération d'une odeur de dégradation d'une boisson comprenant un alcool distillé et ayant une teneur en alcool de 1 à 20 % v/v, le procédé comprenant les étapes consistant à :
conditionner la boisson dans un conditionnement, et
adapter le conditionnement de manière à garantir qu'au moins une partie de la section claire dont dispose le conditionnement présente une transmittance optique d'au plus 70 % dans une zone d'au moins 50 % de la plage de longueurs d'onde de 420 nm à 460 nm, et une transmittance optique d'au moins 80 % dans la plage de longueurs d'onde de plus de 540 nm mais pas plus de 780 nm.
